(19) Europäisches Patentamt
European Patent Office
Office européen des brevets

(11) **EP 1 729 897 B1**

(12) **EUROPEAN PATENT SPECIFICATION**

(45) Date of publication and mention
of the grant of the patent:
**03.03.2010 Bulletin 2010/09**

(51) Int Cl.:
***B08B 7/02*** *(2006.01)*     ***B08B 5/00*** *(2006.01)*

(21) Application number: **05717288.4**

(22) Date of filing: **31.03.2005**

(86) International application number:
**PCT/FI2005/000170**

(87) International publication number:
**WO 2005/095008 (13.10.2005 Gazette 2005/41)**

(54) **METHOD AND APPARATUS FOR GENERATING GAS PULSES**

VERFAHREN UND VORRICHTUNG ZUR ERZEUGUNG VON GASIMPULSEN

PROCEDE ET APPAREIL POUR PRODUIRE DES IMPULSIONS GAZEUSES

(84) Designated Contracting States:
**AT BE BG CH CY CZ DE DK EE ES FI FR GB GR HU IE IS IT LI LT LU MC NL PL PT RO SE SI SK TR**

(30) Priority: **02.04.2004 FI 20040486**

(43) Date of publication of application:
**13.12.2006 Bulletin 2006/50**

(73) Proprietor: **Nirafon Oy**
**15200 Lahti (FI)**

(72) Inventors:
• **JOKELA, Pauli**
**FI-15200 Lahti (FI)**
• **SAVOLAINEN, Kimmo**
**FI-15320 Lahti (FI)**

(74) Representative: **Sundman, Patrik Christoffer et al**
**Seppo Laine Oy**
**Itämerenkatu 3 B**
**00180 Helsinki (FI)**

(56) References cited:
**WO-A1-01/78912**     **WO-A1-98/53926**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# Description

The present invention relates to a method according to the preamble of claim 1 for generating gas phase pulses in a dust-deposit cleaning device comprising a combination of a combustion chamber and an amplifying horn.

According to a method of the present kind, a combustible gas and oxygen is fed into a combustion chamber, which has a generally elongated shape with two opposite ends, to form a combustible gas mixture, the gas mixture is ignited for generating a pressure pulse, and the pressure pulse is released from the chamber and conducted to the amplifying horn for creating an amplified pulse.

The invention also concerns an apparatus according to the preamble of claim 5 and a method for using such apparatus according to the preamble claim 9.

Both the method and the apparatus are particularly useful for generating amplified gas phase pulses (sounds), which can be utilized for cleaning particle deposits in industrial process equipment and in power plants.

In power plants, cement handling etc, where tiny particles are generated or formed as the main product of the process or as by-products, a general problem is that particles are deposited on the surfaces of the processing equipment. In power plants, such particle deposits increase pressure losses and dramatically reduce heat transfer between gas and cooling or heating medium, such as water, steam or preheated combustion air.

Conventionally, cleaning of soot- or particle-laden surfaces of processing equipment, has been carried out by methods known as "soot-blowing" or "soot-hammering", comprising the steps of blowing the equipment with air or steam or by subjecting the surface to steel balls hammering. The latter technique, where steel balls were dropped vertically from above and collected at the bottom of the equipment, is difficult to carry out and it causes some destruction of the internal surfaces. Steam blowing has the disadvantage that it sometimes hardens the ash and causes erosion on the tube surfaces.

More recently, new technology has been developed in which ash- or soot-removal is effected by the use of sound having a frequency in the range from 20 to 250 Hz and a sound pressure of up to 160 dB. Conventional sound generators employed in such methods use pressure air or a rotating siren to make the sound, which is amplified in an expanded horn and directed towards the surfaces where cleaning is needed. The sound pressure, as given in decibels, is not necessarily the best indication for the cleaning power of the device. Sound is normally sinus-waved, and the lower the frequency the lower the rate of change from low pressure to high pressure. At high frequency, on the other hand, the total energy follows the relation: amplitude x frequency ~ energy.

As known, when frequency increases, the amplitude will be reduced at constant energy.

To overcome the above problem, an explosion pulse cleaner has been designed where fuel and air are ignited in an explosion chamber and the explosion pulse is amplified in a normal horn device. With this arrangement it is possible to get a high-speed pressure swing from positive to negative. To mention an example of known technology, reference can be made to the gas pulse cleaner described in WO 01/78912 A1. In the known cleaner, the explosion is generated by igniting a gas mixture comprising hydrogen and oxygen, which is made by electrolysis for every explosion separately. Another example of conventional explosion pulse cleaners is given in WO 98/53926.

In our earlier PCT Application (WO 02/04861 A1) we have disclosed a method of using sound pulses for reducing NOx emissions and for improving combustion efficiency in a power plant. In this technology, a gas-pulse device somewhat similar to the engine of the German V1 rocket is used. Later on, we have constructed different kinds of gas pulse cleaning devices, which are provided with separate combustion chamber ignition spark plugs and gas and air valves. Typically, these kinds of devices will give an effective pulse every 8th second with a sound pressure of 165 to 170 dB measured at a distance of 4 meters. These devices have explosion chambers with a volume of about 25 liters and they burn propane at a rate of 2 g/explosion in the presence of air. The explosion chambers are cylindrical, with a diameter amounting to 1/3 of the length.

A Ukrainian company has introduced an explosion cleaning device, where an electric spark is ignited with a high energy electrical spark in a mixture of air and methane, and it is claimed that a true detonation - instead of an explosion - would be obtained within a 1.5 m long tube. With a detonation of this kind, the local detonation front pressure may be as high as 100 bar, whereas the pressure in a normal gas explosion wave front is only 5 to 7 bar.

US Patent No. 5,015,171 discloses a continuous "Tunable pulse burner", producing a 300 Hz sound wave which is used to improve the combustion in a power plant, but where one pulse burns about 5 mg of gas.

Based on the literature, it appears that in order to convert an explosion into a detonation with a gas-air mixture, there are at least two minimum conditions that need to be met:

a) the energy of igniting spark or laser beam must be about 1000 J or more, and
b) the detonation length in tube must be at least 1500 mm, when the diameter of the detonation tube is about 100 mm.

The transition of normal deflagmation to detonation can also be aided by the formation of some roughness or a spiral structure, known as the "Schelkin Spiral", on the inner wall of the combustion chamber. Mr Schelkin studied this phenomenon already in 1946.

It is an aim of the present invention to provide a gas pulse device for cleaning particle deposits, which device will have a reduced consumption of fuel while still efficiently providing a sound pressure on the order of at least 160 dB at a distance of 4 meters, and a gas local pressure at - at least some point - of 50 to 100 bar or more. Further, it is an object of the present invention to provide a gas pulse device and a method for operating it, which will allow for an increased number of pressure strokes.

The present invention is based on the idea of generating a total or partial detonation or highly improved normal combustion in a combustion chamber having reduced volume. In particular, we have found that it is advantageous to feed a combustible gas and oxygen containing gas into a combustion chamber having an elongated shape with two opposite, generally tapered ends, one of which is closed or closable and the other of which is open to allow for gas eruption. In such a chamber, the gas mixture can be ignited close to the essentially closed end of the combustion chamber. By locating the ignition zone close to one end of the chamber it is possible to create, by the pressure wave reflected from the inner walls of the chamber end, a compression zone, in which the initial explosion within the gas mixture can be transformed into a detonation. The detonation is then allowed to erupt through the remote end of the elongated combustion chamber while creating a sound and pressure wave, which propagates through the gas pulse device and can be directed towards the object subjected to cleaning. Furthermore, it has been found that it is particularly preferable to create the explosion within the ignition zone by means of symmetrically placed ignition means.

More specifically, the method according to the present invention is defined in claim 1.

The apparatus according to the present invention is defined in claim 5.

The invention also concerns a method of cleaning soot- or particle-laden surfaces of processing equipment according to the characterizing part of claim 9.

Preferred embodiments are defined in the dependent claims.

Considerable advantages are obtained by the present invention. Thus, the new combustion chamber is small and it makes it possible to achieve a sound level of about 165 -170 dB at a fuel consumption that is less than 1/10, even less than 1/20, of what has earlier be achieved experimentally.

Next, the invention will be examined in more closely with the aid of the following detailed description and with reference to the attached drawings.

Figure 1 shows schematically the configuration of the mixing section of a combustion chamber according to the invention; and

Figure 2 shows in sideview the construction of a combustion chamber according to the present invention.

As explained above, generally, in the method according to the invention, a combustible gas, such as a combustible hydrocarbon, e.g. propane, and air or another oxygen containing gas which provides the oxygen needed for the combustion/explosion/detonation is introduced into a combustion chamber 1 having an essentially elongated shape with a first tapered and closed end 2 and a second tapered and open end 3, which is oppositely placed with respect to the first. The gas and the oxygen containing gas are fed into and mixed in an ignition zone 4, which is located in the vicinity of the first end of the chamber. The gas is ignited at a plurality of ignition points 5, which are symmetrically disposed with regard to the central axis of the chamber. When the gas is ignited it will create an explosion and an explosion wave, which will be reflected from the inner walls of the first end of the combustion chamber, thus forming a collision center (or "first compression zone"). In the collision center, a detonation will then be initiated in at least one part of the gas mixture.

According to a preferred embodiment, combustible gas and oxygen is fed into the combustion chamber 1, which has a generally elongated shape with two opposite ends 2, 3 to form a combustible gas mixture, the gas mixture is ignited for generating a pressure pulse, and the pressure pulse is released from the chamber and conducted to the amplifying horn 6 for creating amplified pulse, and the gas mixture is ignited in an ignition zone 10 located close to one end 2 of the combustion chamber to generate an initial explosion which causes a pressure wave, which is reflected from the inner walls of the chamber end to form a collision zone, in which the initial explosion is at least partially transformed into a detonation, whereat the gas mixture is ignited in the ignition zone by symmetrically placed ignition means 5.

According to a further embodiment, the combustion wave of the gas-air mixture burned in the combustion chamber 1 is self-compressed by colliding the combustion front, generated from symmetrically installed initiators 5, at a point essentially along the central axis of the chamber 1, by reflecting the combustion front from the gas and air inlet end 2 and by compressing the combustion front at the other end 3 of the chamber, from where the pressure is released to the amplifying horn 6.

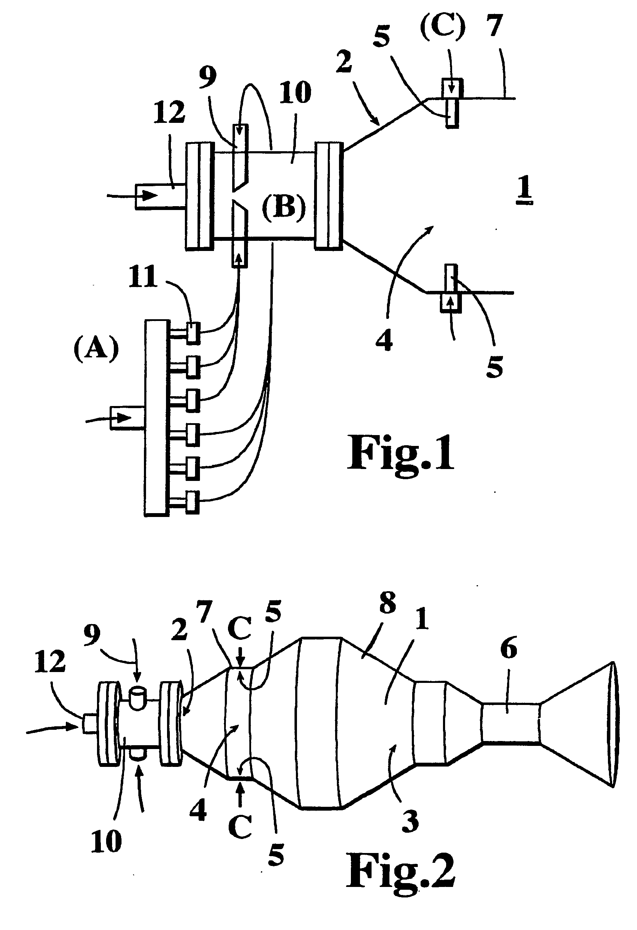

The wave of flame front will travel along combustion chamber, which, as can be seen in the embodiment of Figure 2, is constantly tapering towards the second (remote) end of the chamber, whereby more compression is achieved and flame speed is increased. In this kind of a combustion chamber, the gas fed into the chamber will burn completely within very short distance, in practice about less than 1000 mm, in particular less than about 600 mm.

Thus, as explained above, the combustion wave of the gas-air mixture burned in the combustion chamber will become self-compressed with three different methods at same time, viz. the combustion front, generated from symmetrically installed initiators 5, will collide at center, it will be reflected from round or parabolic or conical bottom at the gas and air inlet end and it will become compressed at the other conical end, wherefrom pressure is released to the amplifying horn 6.

The preferred embodiment of the invention, shown in Figure 2, comprises a combustion chamber 1, wherein a round or parabolic or conical bottom at end 2 will continue a short distance as a cylinder 7 and - at a distance apart from the cylindrical or almost cylindrical part - take up the shape of a gently sloping (truncated) cone 8 towards the second end of the chamber. A horn is fitted after this cone. The horn will increase the cone area by up to 20-30 times compared to the area at the interface between the combustion chamber and horn at the connection point. By "area" we mean the cross-section against the central axis of the chamber.

By a careful design of the combustion chamber 1, the pulsing frequency of the system can be improved. The limiting factor in shortening pulse intervals is typically the widening of the pulses, whereby two successive pulses can be merged. In such case, the cleaning efficiency of the pressure wave decreases, as the pulsing apparatus acts more like a continuous burner. The widening of the pulses is caused by the reflection of the pressure front back and forth in the chamber. Therefore, the chamber should be shaped so that no such undesired reflection areas exist in the chamber. In other words, the purpose of the shaping of the chamber is to channel the energy carried by the pressure front to the amplifying horn as quickly and directly as possible. The abovementioned conical or parabolic shape of bottom at the first end and sloping shape of the second end of the chamber has proven to provide up to 10 - 20 times shorter pulse exit times than an essentially flat bottom of the chamber. The earlier prototypes of the chamber enabled 1 - 2 ignition periods per second, while a chamber, which has been optimized in this respect can provide a pulsing frequency of up to 10-15 Hz, and even more.

Symmetrically installed spark plugs 5 are installed in the combustion chamber in the zone roughly at the part where the cylindrical part of the chamber starts.

Placing of the ignition means has a significant effect of the combustion process. In order to achieve maximum efficiency, shaping of the combustion chamber and placing of the spark plugs 5 are designed in close contact with each other. For example, if the first end of the chamber is parabolic-shaped, the plugs are preferably placed near the acoustic focus of the parabola. Thus, the pressure front emerging from the ignition zone is focused to the amplifying horn as directly as possible, providing shorter pulses of greater sound pressure. The number of spark plugs can vary, for example, between 1 and 8, being typically 3 or 4.

It is well known that, in the expansion area of the horns, pressure will be transformed to greater amplitude, which phenomenon actually corresponds to the term "amplified". At the same time, in combustion chambers having a gently sloping cone or tapered end, such as the present, the pressure will increase in that end.

Burning velocity is a function of temperature and pressure. When pressure increases, temperature will increase and reaction speed will increase progressively.

According to one embodiment, the amplifying horn 6 lies essentially on the longitudinal axis of the combustion chamber in its whole length. In another embodiment, the amplifying horn 6 is curved, whereby the apparatus can be fitted in more narrow spaces.

Another feature, which has aided in improving and increasing the burning velocity comprises a simple mixing arrangement, wherein gas is introduced from two or multiple pipes 9 to the mixing chamber, all tubes having slanting heads so that air flow will become highly turbulent at the head. The mixing zone 10 of the combustion chamber exhibits a plurality of gas feed nozzles for the combustible gas and at least one air feed nozzle for oxygen-containing gas. As will be discussed below, the gas feed nozzles 9 are preferably controlled by magnetic valves 11.

According to one embodiment, the mixing zone 10 is provided with mixing means. The mixing means can comprise an object or a plurality of objects of regular or irregular form mounted inside the mixing zone 10, thus assisting the mixing of the gases by bringing them into turbulent motion. The mixing means can, for example, be a spring-like instrument.

Surprisingly, it was further found that when air flows constantly to the combustion chamber, so that when explosion happens the air flow will simply be compressed backwards, after the combustion this pressure and constant drive pressure of air will rinse the chamber clean from combustion gases and provide new fresh air to a second combustion.

The oxygen-containing gas can also be pure or essentially pure oxygen. By using pure oxygen, the burning process can further be intensified. The feed of the oxygen containing gas to the mixing zone 10 can be controlled by magnetic valves.

According to a preferred embodiment of the invention, a great number of explosions are created in the combustion chamber per time unit. In order to have the gas and air in the apparatus explode at higher frequency there is a need for specific kinds of gas valves, which also operate at high frequency. Small valves operate normally at higher frequency than bigger valves, and for this reason there are used up to six small valves to provide for parallel feed of gas through a plurality of gas tubes. Air can be fed separately from the gas and through one single air feed tube 12 (see Figure 1A). In some preferred embodiments, the air tube has a length before bigger local resistance which is at least two times as long as the combustion chamber.

During operation, for providing, say, explosions at 10 Hz, the air valve is constantly open, whereas the gas valves are operated in such a way that they open and close 10 times per second and they are open during a time interval of from 10 to 50 ms. When the gas valves are closed, the ignition plugs are fired. With this kind of operation mode, it is possible continuously to produce gas pressure pulses with the present apparatus during extended periods of time, typically about 1-3 seconds. Between active operation modes, the combustion chamber is allowed to cool. During the cooling phase airflow can be maintained constant until sufficient cooling has been achieved.

In a typical application, the system is used to provide acoustic pulses at 10 - 20 Hz. The pulses can be generated in sets having a length of, for example, 0.5 - 5 seconds and repeating, for example, every 0.5-3 minutes, depending on the type of target to be cleaned. A single burst can have a duration of 0.1 to 5 ms, typically around 1 ms. During this time, the ignition means can be fired, for example, at a rate of 1 - 100 sparks/ms, typically 40 - 50 sparks/ms.

From acoustic theory, it is known that different bodies coupled together will change the acoustic impedance and this way the total performance of acoustic behavior of the total installation. As far as this feature is concerned, the dimensions of the combustion chamber and the dimensions of the horn are important. The optimum acoustic configuration is very difficult to calculate or near impossible to do it by only mathematical means.

The ignition means are preferably controlled by an ignition unit. According to one embodiment, the ignition unit comprises an ignition coil having a plurality of outputs to the ignition means. The ignition coil can, in principle, resemble ignition coils used in vehicles to ignite combustion engines. However, the ignition coil is arranged to ignite every connected spark plug essentially simultaneously for ensuring precipitous explosion of the gas mixture. By this igniter arrangement, the spark rise time can be decreased to provide for sparkling frequency of, for example, 20 - 60, and typically 40-50 full sparks/ms, of each of the spark plugs 5. Furthermore, ignition pulse frequencies in a typical range of operation, 0.1-30 Hz, for example, can be achieved.

According to one embodiment, the ignition coil is controlled by a driver unit, which comprises an ignition driver and a coil drive unit. The ignition driver receives the ignition trigger signals and outputs ignition signals to the coil drive unit. The coil drive unit feeds the ignition coil.

The apparatus and its embodiments discussed above can be used for cleaning soot- or particle-laden surfaces of processing equipment for removing dust deposits from the surfaces of the processing equipment. Such a method thus comprises using an apparatus having a combustion chamber two opposite ends, the first end allowing for the feed of a combustible gas mixture and the second end allowing for the discharge of a gas pulse generated by combustion of the gas mixture. An amplifying horn is connected to the discharge end of the combustion chamber exhibiting an ignition zone, a reflection zone, and a compression zone, the zones having for example the properties discusses above. The apparatus or a plurality of such apparatuses can be provided in the vicinity of the processing equipment for directing the pressure waves towards the object subjected to cleaning. The apparatus can, for example, be mounted on a wall of the processing space.

**Example**

A combustion chamber having the configuration shown in Figure 2 has a length of 560 mm, a diameter at cylindrical part of 168 mm and a minimum diameter of 66 mm at the point where the horn started to open. Spark plugs (3) are located 84 mm from the round end (Figure 1C) symmetrically positioned along the periphery of the chamber at 120 degrees from each other. The horn had a total length of 1340 mm and it was provided with two different cones, the first one 40 mm - 250 mm, the second one 250 - 350 mm.

The combustible gas (drive gas) used was propane, which was mixed with air, and at a 10 Hz operational frequency we obtained a 170 dB sound level, by burning only about 370 mg propane per explosion.

By contrast, during earlier experiments with a different combustion chamber having an elongated, by essentially throughout cylindrical shape, we burned 2000 mg propane per explosion to get the same sound pressure level as with the equipment represented in this invention. In addition to the great saving in fuel consumption, with the present invention the further important advantage - when considering that it is intended for cleaning of dust deposits - is the speed of positive pressure swing to negative pressure. This is optimally achieved if the burning of gas mixture is as rapid as possible. With the present apparatus configuration this can be achieved.

The gas and air is mixed before the combustion chamber in smaller mixing zone of the combustion chamber, where gas is injected from two pipes in the center of the air flow (cf. Figure 1B). In one embodiment, the combustion chamber had the following configuration: A first conical part with a length of 65 mm, then a cylindrical part with spark plugs, total length 40 mm, further a slight cone of 106 mm, then a cylindrical part some 40 mm long and the in the remote section of the chamber a reverse slight cone (106 mm), a cylindrical part (40 mm), a conical part (65 mm) long, where the cone ends were 115 - 56 mm, so the total combustion chamber was symmetrically widened and symmetrically contracted.

The following is needed for achieving at least in one part of the combustion a real detonation: Symmetrical ignition which causes a first compression when the pressure waves will collide, an end providing focused reflection (achieved with a round, parabolic or conical bottom), said end being the one into which the gases are fed. And finally, and advantageously, a funnel-like part before the pressure wave gases are released to the amplifying horn. At least in this section of the apparatus, where pressure will speedily increase when the waves enter the increasingly narrowing part of the tube, detonation will be initiated. Possibly, not all of the gas will detonate, but probably at least some 10 volume % (e.g.

0.2 - 0.3 part) of gas-air mixture will detonate, whereas the remaining part of the mixture will explode and provide for the necessary compression for detonation.

A sufficient length of the air tube or manifold before the open valve between said valve and combustion chamber is advantageous for air purging subsequently to the pulse.

When the equipment explosions are oscillating 10 times per s, we have found that the best resonance effect is obtained with a configuration, where a 560 mm long combustion chamber and a 1340 mm long horn are installed together. In this assemble the best resonance and best sound pressure levels seem to be obtained. Figure 2 shows the structure of the combustion chamber according to one exemplifying embodiment.

As earlier mentioned, the small multiple parallel magnetic valves can be adjusted to operate for example at a frequency of 0.1 - 30 Hz, and the same can be made easily for the igniter. Because the operation can be electronically guided, we can make series of pulses, where

$$\text{frequency, } f_n = f_{n-1} + \Delta f \text{ or } + \text{--}>\text{- .}$$

This means that the pressure pulse series can be variably programmed. Because the best pulse frequency of a new power plant, in which the pulse cleaner is to be assembled, is not necessarily known beforehand, the equipment according to the present invention can programmed to perform different programs. It is very probable that at certain pulse frequency, even if the horns basic frequency is constant, we can perform optimum cleaning. This is due to the fact that all deposits must have some kind of critical breaking down frequency, where cleaning is most easy.

**Claims**

1. A method of producing gas pressure pulses in a dust-deposit cleaning apparatus comprising in combination a combustion chamber (1) and an amplifying horn (6), wherein

    - a combustible gas and oxygen is fed (9) into the combustion chamber (1), which has a generally elongated shape with two opposite ends (2, 3), to form a combustible gas mixture,
    - the gas mixture is ignited for generating a pressure pulse by symmetrically placed ignition means (5) in an ignition zone located close to one end (2) of the combustion chamber to generate an initial explosion which causes a pressure wave, which is reflected from the inner walls of the chamber end to form a collision zone, in which the initial explosion is at least partially transformed into a detonation, and

    - the pressure pulse is released from the chamber and conducted to the amplifying horn (6) for creating amplified pulse,

    whereby the opposite ends (2, 3) of the combustion chamber (1) are tapered and
    the combustion wave of the gas mixture burned in the combustion chamber (1) is self-compressed by colliding the combustion front at a point essentially along the central axis of the chamber, by reflecting the combustion front from the tapered and closed or closable gas and air inlet end (2) and by compressing the combustion front at the other tapered and open end (3) of the chamber (1), from where the pressure is released to the amplifying horn (6).

2. The method according to claim 1, wherein the feed of gas (9) into the combustion chamber is controlled by magnetic valves (11) to provide for a plurality of simultaneous gas feed flow into the chamber (1).

3. The method according to claim 1 or 2, wherein air is constantly fed (12) into the combustion chamber (1) during operation.

4. The method according to any of the preceding claims, wherein a series of gas phase pressure pulses are generated and the frequency of the pulses is varied.

5. Dust-deposit cleaning apparatus, comprising in combination

    - a combustion chamber (1), having an elongated shape with two opposite ends (2, 3), the first (2) of which allows for the feed of a combustible gas mixture and the second (3) of which allows for the discharge of a gas pulse generated by combustion of the gas mixture, and
    - an amplifying horn (6) connected to the discharge end (3) of the combustion chamber,

    the combustion chamber (1) exhibiting

    - an ignition zone (4) located in the vicinity of the first end (2), said zone (4) being provided with symmetrically placed ignition means (5),

    whereby the first and second ends (2, 3) of the combustion chamber (1) are tapered, the combustion chamber (1) thus exhibiting and

    - a reflection zone defined by the inner walls of the first tapered and closed or closable end (2) to provide for reflection of the gas pressure waves generated by the ignition of the gas mixture, and
    - a compression zone located in the vicinity of the second tapered and open end (3) to compress the gas waves.

6. The apparatus according to claim 5, wherein the first end (2) provides for focused reflection of the gas waves, achieved with a round, parabolic or conical bottom, and compression zone of the second end is defined by a funnel-like part at the discharge end (3) of the chamber (1).

7. The apparatus according to claim 5 or 6, wherein the combustion chamber (1) is provided with a mixing zone (10), which exhibits a plurality of gas feed nozzles (9) for the combustible gas and at least one air feed nozzle (12) for oxygen-containing gas, said gas feed nozzles (9, 12) being controlled by magnetic valves.

8. The apparatus according to any of claims 5-7, wherein the symmetrically placed ignition means (5) are controlled by ignition unit, which comprises an ignition coil and an ignition coil driver unit.

9. A method of cleaning soot- or particle-laden surfaces of processing equipment **characterized by** using the apparatus according to any of claims 5 - 8 for removing dust deposits from the surfaces of the processing equipment.

**Patentansprüche**

1. Verfahren zum Erzeugen von Gasdruckimpulsen in einer Staubablagerungsreinigungsvorrichtung, die in Kombination eine Verbrennungskammer (1) und ein Verstärkungshorn (6) aufweist, wobei

   - ein brennbares Gas und Sauerstoff in die Verbrennungskammer (1) zugeführt werden (9), die eine im wesentlichen längliche Form mit zwei gegenüberliegenden Enden (2, 3) aufweist, um eine brennbare Gasmischung zu bilden,
   - die Gasmischung zum Erzeugen eines Druckimpulses durch eine symmetrisch angeordnete Zündeinrichtung (5) in einer Zündzone gezündet wird, die sich nahe eines Endes (2) der Verbrennungskammer befindet, um eine anfängliche Explosion zu erzeugen, die eine Druckwelle verursacht, die von den Innenwänden des Kammerendes reflektiert wird, um eine Stoßzone zu bilden, in der die anfängliche Explosion mindestens teilweise in eine Detonation umgewandelt wird, und
   - der Druckimpuls aus der Kammer freigesetzt und zum Verstärkungshorn (6) geleitet wird, um einen verstärkten Impuls zu erzeugen,

   wodurch die gegenüberliegende Enden (2, 3) der Verbrennungskammer verjüngt werden und die Verbrennungswelle der Gasmischung, die in der Verbrennungskammer (1) verbrannt wird, selbstkomprimiert wird, indem die Verbrennungsfront an einer Stelle zusammenstößt, die sich im wesentlichen längs der Mittelachse der Kammer befindet, die Verbrennungsfront vom verjüngten und geschlossenen oder schließbaren Gas- und Lufteinlaßende (2) reflektiert wird und die Verbrennungsfront am anderen verjüngten und offenen Ende (3) der Kammer (1) komprimiert wird, von wo der Druck in das Verstärkungshorn (6) freigesetzt wird.

2. Verfahren nach Anspruch 1, wobei die Gaszufuhr (9) in die Verbrennungskammer durch Magnetventile (11) gesteuert wird, um für mehrere gleichzeitige Gaszufuhrströme in die Kammer (1) zu sorgen.

3. Verfahren nach Anspruch 1 oder 2, wobei während des Betriebs konstant Luft in die Verbrennungskammer (1) zugeführt wird (12).

4. Verfahren nach einem der vorhergehenden Ansprüche, wobei eine Reihe von Gasphasendruckimpulsen erzeugt wird und die Häufigkeit der Impulse variiert wird.

5. Staubablagerungsreinigungsvorrichtung, die in Kombination aufweist

   - eine Verbrennungskammer (1), die eine längliche Form mit zwei gegenüberliegenden Enden (2, 3) aufweist, deren erstes (2) die Zufuhr einer brennbaren Gasmischung ermöglicht und deren zweites (3) den Auslaß eines Gasimpulses ermöglicht, der durch die Verbrennung der Gasmischung erzeugt wird, und
   - ein Verstärkungshorn (6), das mit dem Auslaßende (3) der Verbrennungskammer verbunden ist,

   wobei die Verbrennungskammer (1) aufweist

   - eine Zündzone (4), die sich in der Nähe des ersten Endes (2) befindet, wobei die Zone (4) mit einer symmetrisch angeordneten Zündeinrichtung (5) versehen ist,

   wodurch das erste und das zweite Ende (2,3) der Verbrennungskammer (1) verjüngt sind, wobei die Verbrennungskammer (11) folglich aufweist

   - eine Reflexionszone, die durch die Innenwände des ersten verjüngten und geschlossenen oder schließbaren Endes (2) definiert wird, um für eine Reflexion der Gasdruckwellen zu sorgen, die durch die Zündung der Gasmischung erzeugt werden, und

- eine Kompressionszone, die sich in der Nähe des zweiten verjüngten und offenen Endes (3) befindet, um die Gaswellen zu komprimieren.

6. Vorrichtung nach Anspruch 5, wobei das erste Ende (2) für eine fokussierte Reflexion der Gaswellen sorgt, die mit einem runden, parabolischen oder konischen Boden erzielt wird, und die Kompressionszone des zweiten Endes durch ein trichterförmiges Teil am Auslaßende (3) der Kammer (1) definiert wird.

7. Vorrichtung nach Anspruch 5 oder 6, wobei die Verbrennungskammer (1) mit einer Mischzone (10) versehen ist, die mehrere Gaszufuhrdüsen (9) für das brennbare Gas und mindestens eine Luftzufuhrdüse (12) für sauerstoffhaltiges Gas aufweist, wobei die Gaszufuhrdüsen (9, 12) durch Magnetventile gesteuert werden.

8. Vorrichtung nach einem of Ansprüche 5 - 7, wobei die symmetrisch angeordnete Zündeinrichtung (5) durch eine Zündeinheit gesteuert wird, die eine Zündspule und eine Zündspulentreibereinheit aufweist.

9. Verfahren zum Reinigen von mit Ruß oder Teilchen beladenen Oberflächen einer Verarbeitungseinrichtung, **gekennzeichnet durch** das Verwenden der Vorrichtung nach einem der Ansprüche 5 - 8 zur Entfernung von Staubablagerungen von den Oberflächen der Verarbeitungseinrichtung.

## Revendications

1. Procédé de production d'impulsions de pression gazeuses dans un appareil de nettoyage de dépôts de poussière comprenant en combinaison une chambre de combustion (1) et un pavillon d'amplification (6), dans lequel

   - un gaz combustible et de l'oxygène sont fournis (9) à la chambre de combustion (1), qui a une forme généralement allongée avec deux extrémités opposées (2, 3), pour former un mélange gazeux combustible,
   - le mélange gazeux est enflammé pour générer une impulsion de pression grâce à des moyens d'allumage placés symétriquement (5) dans une zone d'allumage située près d'une extrémité (2) de la chambre de combustion pour générer une explosion initiale provoquant une onde de pression, qui est réfléchie par les parois internes de l'extrémité de la chambre pour former une zone de collision, dans laquelle l'explosion initiale est au moins partiellement transformée en une détonation, et

   - l'impulsion de pression est libérée de la chambre et conduite vers le pavillon d'amplification (6) pour créer une impulsion amplifiée,

   moyennant quoi les extrémités opposées (2, 3) de la chambre de combustion (1) sont coniques, et l'onde de combustion du mélange gazeux brûlé dans la chambre de combustion (1) est auto-comprimée en faisant entrer en collision le front de combustion au niveau d'un point essentiellement le long de l'axe central de la chambre, en réfléchissant le front de combustion depuis l'extrémité d'entrée de gaz et d'air conique fermée ou pouvant être fermée (2) et en comprimant le front de combustion au niveau de l'autre extrémité conique ouverte (3) de la chambre (1), depuis laquelle la pression est libérée vers le pavillon d'amplification (6).

2. Procédé selon la revendication 1, dans lequel l'alimentation en gaz (9) de la chambre de combustion est contrôlée par des robinets électromagnétiques (11) pour fournir une pluralité de courants gazeux simultanés dans la chambre (1).

3. Procédé selon la revendication 1 ou 2, dans lequel l'air est constamment fourni (12) à la chambre de combustion (1) pendant le fonctionnement.

4. Procédé selon l'une quelconque des revendications précédentes, dans lequel une série d'impulsions de pression en phase gazeuse sont générées et la fréquence des impulsions varie.

5. Appareil de nettoyage de dépôts de poussière, comprenant, en combinaison

   - une chambre de combustion (1), ayant une forme allongée avec deux extrémités opposées (2, 3), dont la première (2) permet la fourniture d'un mélange gazeux combustible et dont la seconde (3) permet la décharge d'une impulsion gazeuse générée par la combustion du mélange gazeux et
   - un pavillon d'amplification (6) connecté à l'extrémité de décharge (3) de la chambre de combustion,

   la chambre de combustion (1) présentant

   - une zone d'allumage (4) située au voisinage de la première extrémité (2), ladite zone (4) étant dotée de moyens d'allumage placés symétriquement (5),

   moyennant quoi les première et seconde extrémités (2, 3) de la chambre de combustion (1) sont coniques, la chambre de combustion (1) présentant ainsi

- une zone de réflexion définie par les parois internes de la première extrémité conique fermée ou pouvant être fermée (2) pour permettre la réflexion des ondes de pression de gaz générées par l'inflammation du mélange gazeux, et

- une zone de compression située au voisinage de la seconde extrémité ouverte conique (3) pour comprimer les ondes gazeuses.

6. Appareil selon la revendication 5, dans lequel la première extrémité (2) permet la réflexion focalisée des ondes gazeuses, réalisée avec une partie inférieure arrondie, parabolique ou conique, et la zone de compression de la seconde extrémité est définie par une partie en forme d'entonnoir au niveau de l'extrémité de décharge (3) de la chambre (1).

7. Appareil selon la revendication 5 ou 6, dans lequel la chambre de combustion (1) est dotée d'une zone de mélange (10), qui présente une pluralité de buses d'alimentation en gaz (9) pour le gaz combustible et au moins une buse d'alimentation en air (12) pour le gaz contenant de l'oxygène, lesdites buses d'alimentation en gaz (9, 12) étant contrôlées par des robinets électromagnétiques.

8. Appareil selon l'une quelconque des revendications 5 à 7, dans lequel les moyens d'allumage placés symétriquement (5) sont contrôlés par l'unité d'allumage, qui comprend une bobine d'allumage et une unité de commande de bobine d'allumage.

9. Procédé de nettoyage de surfaces chargées de suie ou de particules d'équipements de traitement, **caractérisé par** l'utilisation de l'appareil selon l'une quelconque des revendications 5 à 8 pour éliminer les dépôts de poussière des surfaces des équipements de traitement.

Fig.1

Fig.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0178912 A1
- WO 9853926 A
- WO 0204861 A1
- US 5015171 A